Europäisches Patentamt

European Patent Office

Office européen des brevets

(11) Publication number: **0 408 530 A2**

# EUROPEAN PATENT APPLICATION

(21) Application number: **90830324.1**

(22) Date of filing: **12.07.90**

(51) Int. Cl.5: **H04Q 3/60**

The title of the invention has been amended (Guidelines for Examination in the EPO, A-III, 7.3).

(30) Priority: **14.07.89 IT 4818789**

(43) Date of publication of application:
**16.01.91 Bulletin 91/03**

(84) Designated Contracting States:
**AT BE CH DE DK ES FR GR LI LU NL SE**

(71) Applicant: **TELESIA MICROELETTRONICA S.r.l.**
**38 Viale della Civiltà del Lavoro**

I-00144 Roma RM(IT)

(72) Inventor: **Rinaldi, Paolo**
**20 Via Bruxelles**
**I-00198 Roma RM(IT)**
Inventor: **Cecili, Federico**
**20 Via Casal dei Pazzi**
**I-00156 Roma RM(IT)**

(74) Representative: **Tonon, Gilberto et al**
**c/o Società Italiana Brevetti S.p.A. Piazza di**
**Pietra, 39**
**I-00186 Roma(IT)**

(54) **Subscriber's line concentrator.**

(57) A concentrator of telephonic traffic for the use between a main distributing frame of a telephone exchange and/or an intermediate point between the main distributing frame/roadside cable connection point/block terminal at the level of a building. The concentrator by means of the detection of the status of N lines on the side of the telephone exchange, and of N lines on the side of the subscribers, allows the telephone traffic utilizing M lines available on a section of line between the main distributing frame of the telephone exchange and the subscribers with M smaller than N on a general base "first come - first served". There is utilized a pair of management apparatus for the continuous check of the status of the telephone traffic and for the control of a first and of a second MxN switches arranged respectively on the side of the telephone exchange and on the side of the subscribers with an intercommunication between the management microprocessors performed on the communication lines. The microprocessors and the elements associated thereto may be remotely supplied with power and/or locally supplied with electric power.

FIG. 2

## AN IMPROVEMENT IN CONCENTRATORS OF TELEPHONE TRAFFIC, BETWEEN A TELEPHONE EXCHANGE AND A PLURALITY OF TELEPHONE SUBSCRIBER CONNECTIONS

### Background

One of the most important problems in telephony is the one of the insufficiency of available lines at various levels of branching between the telephone exchange (main distributing frame) up to arriving to the so-called connection box of a building where the several subscriber apparatus are located. The problems of line insufficiency have been resolved till now with the classic traffic concentrators between the several points of a system comprising telephone exchanges arranged as a multiple star, with the so-called "duplex" systems, for the problems concerning the subscriber lines, and the systems using an auxiliary modem between the main exchange distributing frame and the subscriber lines.

The practice has shown that these solutions are not entirely satisfactory owing to several reasons. The well known traffic concentrators are not useful in the section between the telephone exchange and the subscribers; the "duplex" system is a rigid one in that it is a space sharing with mutual cut-out, between two single subscribers; the modem system is in the practice it too limited to a pair of subscribers even if it represents an improvement with respect to the classic "duplex" system.

As a matter of fact, with the modem system, it is difficult to utilize more than one modem on a same line section in that the signals have to travels on telephone pairs or twisted pairs of a conventional kind which is not shielded and consequently there may appear cross-talk and/or intermodulations with consequences which cannot be accept for the end user.

The purpose of the present invention is that of providing an automatic concentrator for telephone traffic capable of handling N subscriber over M lines with M ≤ N in any point between the main distributing frame of the telephone exchange and the N subscriber.

### Disclosure

The present invention relates to an improvement in concentrators for telephone traffic, useful in particular for the utilization between a telephone exchange and a plurality of subscriber telephone connections. More in particular the aim of the present invention is that of providing an automatic concentrator of telephone traffic capable of managing N subscribers over M lines M ≤ N being in any point between the main distributing frame of a telephone exchange and the N subscribers.

According to the present invention there is provided a first unit located on the side of the telephone exchange upstream of the "bottleneck" of connection telephone lines towards and from a subscriber, a second unit located downstream with respect to said "bottleneck" arranged in a place towards the side of the subscribers starting from which there are no "bottlenecks"; means on said first unit for checking the status of the N lines on the side of telephone exchange from the standpoint of the telephone traffic; and for driving a first routing switch on M lines; means on said second unit for checking the status of the N lines on the sides of the subscribers from the standpoint of the telephone traffic and for driving a second routing switch on M lines; intercommunication means between said first and said second unit for rendering the management of said first and second switch coherent and for the management of auxiliary operations, and means for the remote power supply for said second unit arranged on the side of the subscribers.

The present invention will now be disclosed with reference to an embodiment thereof preferred at present, referred to as an example and not as a limitation, and on the basis of the figures of the attached drawing, wherein:

figure 1 shows a typical situation of insufficiency of telephone lines between a telephone exchange and subscribers, in which the present invention may be used;

figure 2 shows a simplified block diagram of the structure of a traffic concentrator according to the invention applied to the situation shown in figure 1;

figure 3 shows a block diagram of the structure of the unit on the "telephone exchange side" of the traffic concentrator according to the invention;

figure 4 shows a block diagram of the structure of the unit on the "subscriber side" of the concentrator of telephone traffic according to the invention;

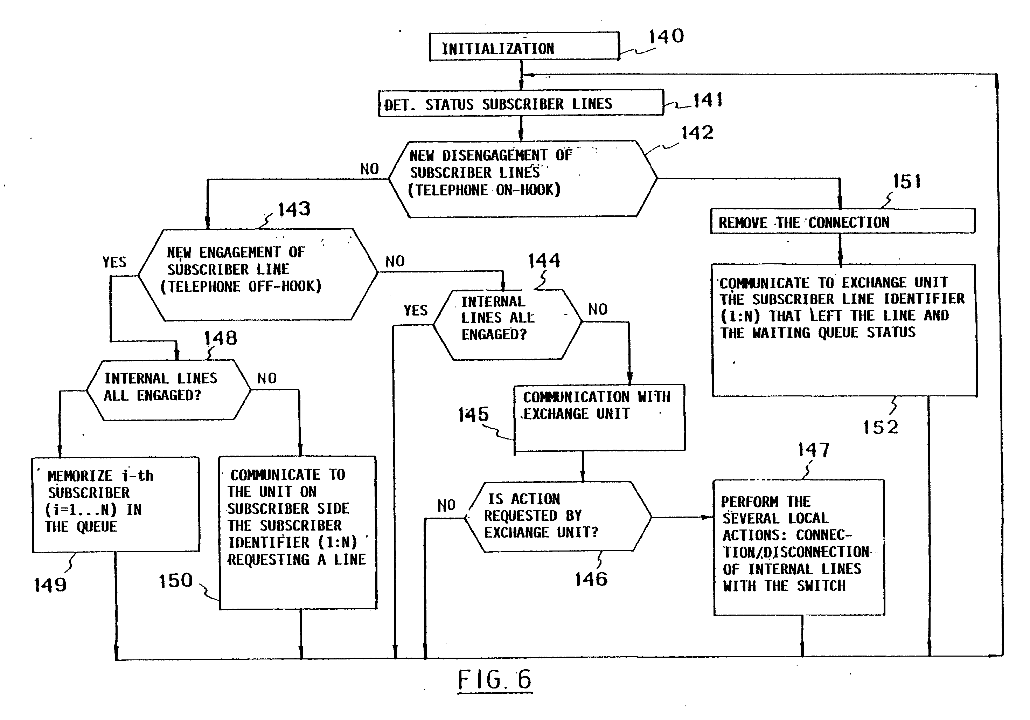

figures 5 and 6 show flow diagrams illustrative of the operation of the units shown, respectively, in figures 3 and 4.

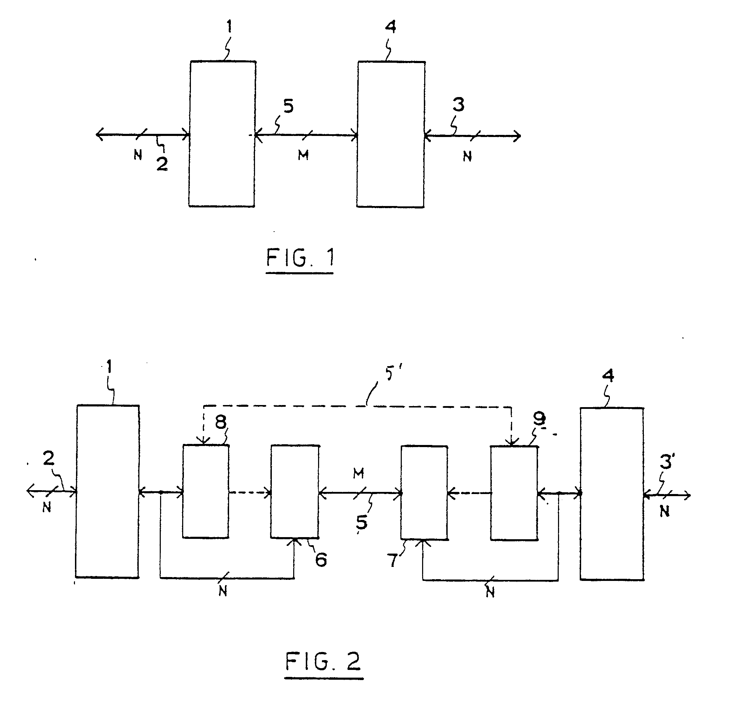

With reference to the drawings and in particular to figure 1, a typical situation is shown therein, in which the concentrator of telephone traffic according to the present invention may be used. Taking into account the situation in which an output main distributing frame 1 of a telephone exchange or another connection point of a section where N telephone pairs 2 arrive in a number corresponding to N telephone subscribers whose lines 3, in a number of N arrive to a connection box or cabinet 4. The members 1 and 4 are interconnected with a plurality of M telephone pairs 5, with M<N for which the N pairs of the bundle 3 on the side of the subscribers cannot be connected in a ratio 1:1 with the N pairs of the bundle 2 on the side of the telephone exchange. There is therefore in 5 a "bottleneck" with a deficiency of N-M telephone pairs, which may be present in any point between the telephone exchange towards which the bundle 2 is directed and the group of subscribers towards which the bundle 3 is directed.

The problem of the "bottleneck" constituted by the bundle 5 was resolved, at least for a limited time, with the techniques detailed in the background. According to the present invention it is intended to resolve the problem in question on the basis of the architecture shown generally in figure 2.

Starting from the wellknown statistical assumptions well coded in the techniques of telephony, it is statistically not much likely that all the N lines of the bundle 3 of figure 1 be at the same time connected or in the need of a connection with the same number of N lines of the bundle 2 of figure 1. This probability decreases according to well established statistic laws with the increase of the number N.

As it can be seen in figure 2, there is provided that at the output of the members 1 and 4 there is available, respectively, a bundle $2'$ and a bundle $3'$, each comprising N lines or pairs, that arrive to a first and a second switch 6, 7, connected to the bundle 5 and each capable of performing M x N connections under the control of respective intelligent management units 8, 9 capable of interacting each other on an either real or phantom line $5'$.

The line $5'$, as it will be seen hereinafter, may also make part of the bundle 5.

As it will be shown hereinafter, the management units 8 and 9 provided to analyze according to an ascertained program the situation present both on the bundle $2'$ and on the bundle $3'$ for establishing through the switches 6, 7 and the bundle 5 with M lines, a number K of connections, the number K being variable between 0 and the limit value M. It is clear that in the case of K = M, N-M lines of the bundle 2 and 3 will be in some way anyhow temporarily disabled as long as the limit situation of saturation on the bundle 5 (M connections) lasts.

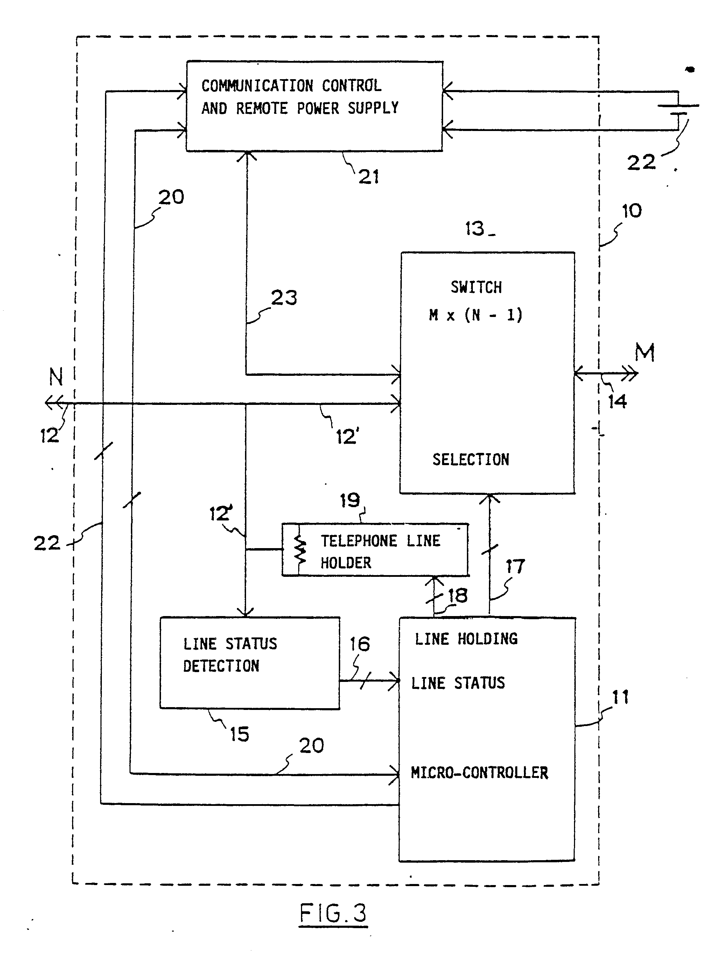

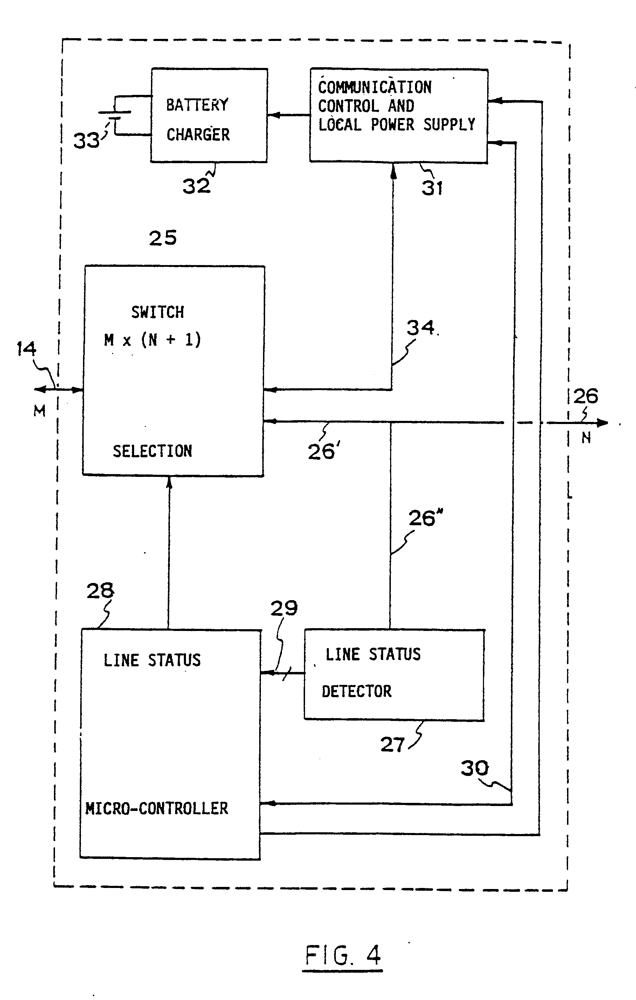

With reference now to figures 3 and 4 we will disclose the units, respectively on the side of the telephone exchange and on the side of the subscribers. The unit on the side of the telephone exchange includes a group generally shown in 10, which comprises a microcontroller generally shown in 11, which is dedicated to the management of the operations of the unit according to several signals and situations which appear during the telephone traffic. On the unit 10 there arrives a bundle 10 of telephone lines coming, for instance, from a main distributing frame, not shown, of a telephone exchange. The bundle 12 arrives in $12'$ to a switch 13, which provides to perform the necessary routing between the lines of the bundle 12 and the lines of a bundle 14. As it has been said hereinbefore, the lines of the bundle 12 are, for instance, in a number of N, and the lines of the bundle 14 are in a number of M, being $M \leq N$. The bundle of lines 12 is branched also in $12'$ towards a unit 15 for the detection of the status of the lines, for instance for detecting an incoming call, the presence of the conventional 60V of a free line, of 10V of a line committed to a communication, or voltages lower than, for instance 5V which indicate the absence of a connection. The unit 15 provides on a connection 16 to communicate the condition of the lines of the bundle 12 to the microcontroller units shown as a whole in 11. The microcontroller unit 11 controls through a plurality of connections 17 the switch 13 for performing the necessary routing according to the management criteria which will be illustrated hereinafter. By means of a set of lines 18, the control unit 11 drives a device 19 arranged for holding a circuit when necessary, by putting in parallel on the lines on one or more of the lines of the bundle 12, an impedance of a predetermined value, for instance of the value of 400 Ohm, for complying with the telephone standards presently in force. The control unit 11 communicates through a communication line 20 with a unit 21 for the control of the communication of and for the remote power supply of the unit directed towards the subscribers' side as it will be seen hereinafter. The unit 21 is supplied by means of a battery of the telephone exchange generally shown in 22. Both on the unit 11 and on the unit 21, there arrive moreover control signals produced by the telephone exchange, which travel on a line 22. Between the switch 13 and the unit 21 for the control of the communication of and for the remote power supply, there is moreover arranged a data line 23 for performing an intercommunication between the microcontroller contained in the unit 11 and the similar one arranged on the unit on the side of the telephone exchange.

Conveniently the data line 23 will carry both control and communication signals between the processors and electric power according to well known techniques of superposition and signalling and supply of electric power. In this disclosure it is believed not necessary to show into detail the several decoupling and separation circuitries for the combination between data and electric power of remote power supply, because these are techniques well known to a person skilled in the art. With reference to figure 4, the bundle 14 shown in figure 3 arrives downstream of the so-called "bottleneck" in 14' where it is connected to a switch 25 similar to the switch 13 of figure 3. From the unit of figure 4 comes a bundle of lines indicated as a whole in 26 to which the single subscriber telephone apparatus are connected. The lines leading to the single subscriber apparatus are then branched in 26' for arriving to the switch 25 and in 26" for arriving to a unit 26 for the detection of the status of the lines substantially similar to the unit 15 shown in figure 3. In the unit on the side of the subscribers there is located a microprocessor unit 28 preferably cooperating in a Master-Slave relationship with the microprocessor unit 11 of figure 3, whereon arrive the data leading to the status of the lines on the side of the subscribers on the bundle 29, control data 30 for the management performed by the unit 21 of control of communication and generation of the local power supply that provides, by means of a power supply 31, to maintain charged a battery 33 for the local power supply. This is necessary because it is considered that the unit on the side of the subscribers may not have available power supply as, on the contrary, it occurs for the unit located on the side of the telephone exchange shown in figure 3. The switch 25 is connected with a data communication line 34 between the microprocessors through the unit 31 in order to perform all those auxiliary operations that allow to synchronize and control the operation of the two microprocessors, such as handshaking, as it is well known to a person skilled in the art of microprocessor techniques. It should also be remarked that not necessarily the interconnection line between the microcontroller units be a dedicated line. This interconnection line may be anyone of the M lines.

For improving the efficiency of the system, when the interconnection line between the microcontroller management units is a line that makes part of the bundles of lines M, this line may be temporarily assigned to a telephone communication. In this case, in which all the M lines are occupied by telephone traffic, no exchange of data occurs between the microcontroller management units and the remote power supply of electric power is held up and the operation of the management unit on the side of the subscribers is committed to the local battery. The program for the management by said management units arranges so that the first of the lines of the bundle M which becomes free is utilized for the exchange of data between the management units and to furnish electric power to the management unit provided with a battery of auxiliary power supply. (It is to be remarked, indeed, that if all the M lines are occupied by telephone traffic, the two management units do not have information to communicate with each other, and must only perform local operations.)

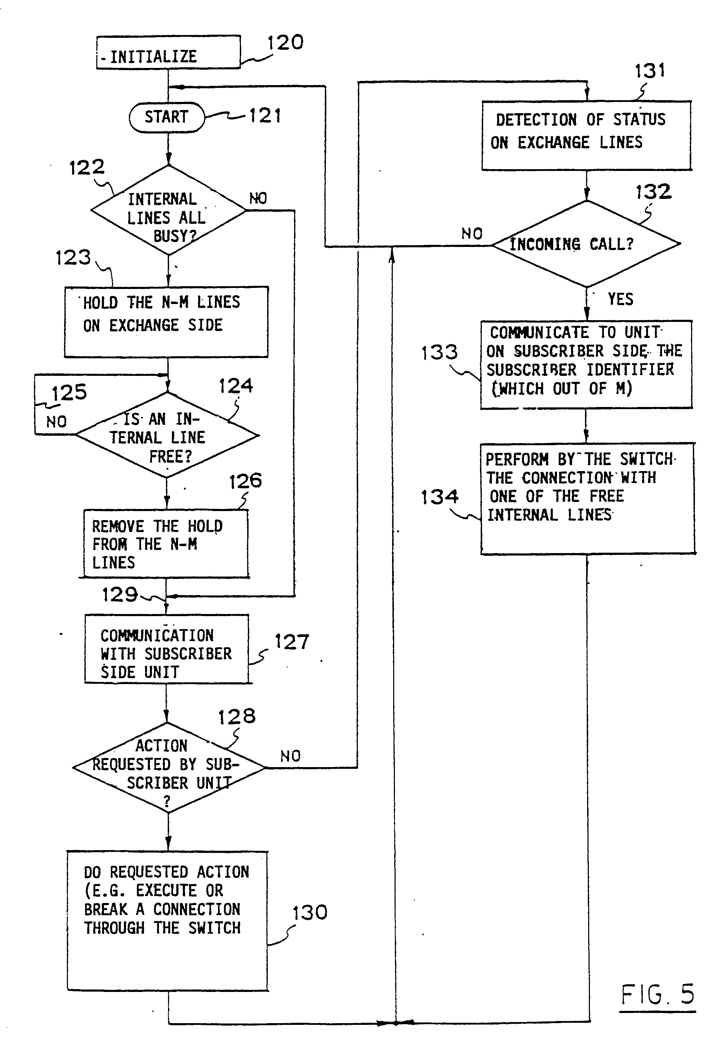

With reference to the flow sheet shown in figure 5, now the procedure, which occurs on the management apparatus on the side of the telephone exchange will be disclosed.

After the initialization step (block 120) of the control microprocessor, one passes on to the start step (block 121) in which a scanning and analysis of the status of the internal lines is performed, i.e. on the bundle of M pairs. If all the internal lines are occupied (decision block 122) there follows the operation indicated by block 123 wherein the N-M lines coming from the telephone exchange, for instance by means of a resistive load (typically 400 Ohm), are placed in the "hold up", in order that any subscriber calling one of the telephone numbers corresponding to the set N-M finds "busy" situation. From the block 123 one passes to the decision block, wherein there is analysed if and when one of the internal lines (M) is rendered free. In the negative case, the control passes to a loop on 125. If the decision of the block 124 was affermative, the control passes to the action 126 with which the imposition of "busy" on said N-M lines of the telephone exchanges is removed. At this moment one passes to the action of the block 127 of communication with the management unit on the subscriber side (downstream of the "bottleneck"). At this point (129), one arrives even if the response to the decision block 122 was negative. The communication between the management units leads to the decision block 128 with which it is determined whether or not an action is required by the management unit located on the subscriber side. In the affirmative cases, one passes to the block 130 with which the execution of the requested operation (for instance the execution of a connection or the opening of a connection by means of the switch located on the subscriber's side) is indicated. After having performed the operation according to the block 130, the control returns to the statement 121. If the decision on the decision block 128 was negative, the control passes to the block 131 in which the detection of the status of the lines on the side of the telephone exchange is performed. Then the control passes to the decision block 132 relating to the fact whether there is a call arriving from the side of the telephone exchange or not. In the negative case, the control returns to the block 121. In the affirmative case (incoming call) on the block 132, the control passes to the block 133 with which the management unit located on the side of the telephone exchanges communicates to the unit located on the side of the subscribers a subscriber identification code (not necessarily correlated with the subscriber telephone number because the conventional selection has been already performed upstream in the telephone exchange). The control then passes to the block 134 which arranges by means of a switch to perform the connection with one of the free lines of the group M. At this moment the operations of the management unit on the side of the telephone exchange are ended and the control returns to the block 121.

With reference to the flow sheet shown in figure 5, now the procedure that occurs on the management apparatus on the side of the subscribers will be disclosed. The procedure starts with an initialization (block 140) either autonomously or upon a command from the management unit on the side of the telephone exchange and passes to the block 141 of detection of the status of the subscriber lines (N lines downstream with respect to the "bottleneck"), i.e. the status of free, busy, or the like. Then the decision block 142 is activated for the ascertainment of a new unlocking of subscriber line (on-hook of the receiver of the relating telephone apparatus). In the negative case, the control passes to the decision 143 for the ascertainment of a possible new engagement of the subscriber line (situation of hook of the relative telephone). In the negative case, the control passes to the decision block 144 for the ascertainment as to whether all the internal lines are busy. In the affirmative case, the control returns to the block 141. In the case of a negative output from the block 144 (internal lines which are not all engaged), the block 145 establishes a communication with the management unit on the side of the telephone exchange, in order to ascertain whether a request exists for any action by the management unit on the side of the telephone exchange (block 146).

In the negative case the control returns on the block 142. In the case of an affirmative exit from the block 146, on the block 147 the several local operations such as connection or disconnection on the internal by means of the switch on the side of the subscribers are performed, and then the control returns to the block 141.

Going back the decision block 143, in the case of an affirmative exit from the same, the control passes to the decision block 148 with which it is ascertained as to whether all the internal lines are engaged. In the case of an affirmative exit from the block 148, an identification "i" ("i" being equal to 1:N) of the subscriber, which has had engaged the line in block 143 to place him in a "waiting queue", is memorized (block 149) in a memory area of the management unit on the side of the subscriber, after which the control returns to the block 141.

In the case of a negative exit from the block 148, i.e. the not all engaged internal lines, there enters in play the block 150 with which the number or identification code of the subscriber line (1:N) which requests the line is communicated to the management unit on the side of the telephone exchange. After having performed this, the control returns again to the block 141.

Going now back to the decision block 142, relating to a possible new disengagement of the subscriber lines, in the case of an affirmative exit from this block, the control passes to the block 141 with which the disconnection operation (on the switch on the side of the subscriber and on the side of the telephone exchange) is performed. At the same time, (block 152) a communication (block 151) is sent to the management unit on the side of the telephone exchange to provide it with the number or identification code of the subscriber line (1:N) which has left the line which is part of the group M and the status of the waiting queue (see the set of operations according to blocks 148, 149, 150). After having performed this, the control returns in the block 141. The management of the waiting queue is performed in order that no penalizing or appropriation situation occurs, taking into account the local condition of set-up of the apparatus and of possible particular criteria of the management of the telephone traffic.

It should be remarked in this respect that the apparatus according to the present invention, even if disclosed with reference to a telephone exchange, such as may be a telephone exchange that makes part of the national telephone service, may also be utilized in connection with private branch exchanges (PBX), where situations similar to the one described with reference to a telephone exchange and a group of subscribers made in part of the national telephone service may occur.

Indeed, similar situations may occur at the interior of a system of the kind so-called "private" such as hotels, large offices, and so on, where particularly in the case of an expansion there may be occur problems similar to the ones of the public service.

In this latter case, the performances could be modified in a way which will be clear to a person skille in the art, establishing, for instance, with software modifications, different priority levels both in input and in output for different groups of subscribers, at the level of the "bottleneck", as well as different access criteria in input/output towards the public lines, enabling levels (city level, intercity level, international level). Moreover, it is clear that particular criteria could be established for the handling of data lines (computer, facsimile, electronic mail, etc.).

These modifications are not disclosed in detail, because they are within the grasp of a person skilled in the art. The present invention has been disclosed with reference to a preferred embodiment of the same, referred to as a non limitative but illustrative example and it will be understood that in the practice modifications and changes may be introduced by a person skilled in the art without departing from the scope of the present invention.

## Claims

1. A concentrator for telephone traffic between a first plurality N of connection points connected to a telephone exchange and a second plurality N of subscriber telephone connection, in which said plurality N share a bundle M of connection liasons, being M smaller than N, characterized in that it comprises first microcontroller means associated to the N connection points connected to the telephone exchange and second microcontroller means associated to the N connection points on the side of the telephone subscribers; first means for detecting the status of the lines associated to said first microcontroller means and second means for detecting the status of the lines associated to said second microcontroller means; first switching means with M x N connection points driven by said microcontroller means, second switching means comprising M x N connection points driven by said second microcontroller means, said first and second switching means being interconnected by said bundle of M connection lines; first and second program means cooperating, respectively, with said first and second microcontroller means for establishing a telephone connection between said N connection points connected to the telephone exchange and said N connection points on the subscriber side, as a function of data provided by said detector of the status of the lines, as a function of the status of the present or potential telephone traffic, and of criteria established in said program means, in order to optimize the utilization of said M telephone connection lines.

2. A concentrator for telephone traffic according to claim 1, characterized in that said first and second microcontroller means are associated to intercommunication means arranged for the exchange of management messages and of data messages and instructions for the coherence of operation of said microcontrollers.

3. A concentrator for telephone traffic according to claim 2, characterized in that said intercommunication means comprise means for the remote power supply of the components of said telephone traffic concentrator located .on the side of connection to the telephone subscribers.

4. A traffic concentrator according to claim 3, characterized in that said intercommunication means and said means for the remote power supply are arranged for causing the travelling of intercommunication data and electric power for the remote power supply on a same line of the telephone-type.

5. A traffic concentrator according to claim 4, characterized in that said telephone-type line is a line that makes part of said bundle of M lines managed through said first and second switches.

6. A concentrator for telephone traffic according to one or more of the preceding claims, characterized in that components of said traffic concentrator located on the side of connection to the telephone subscribers are associated to power supply means comprising a battery maintained charged by means of said remote power supply arrangement.

7. A concentrator for telephone traffic according to claim 6, characterized in that said program means are arranged for allowing the temporary passage of telephone traffic on said intercommunication line between microcontrollers and remote power supply; the operation of the components of said traffic concentrator located on the side of the telephone subscribers being performed by said battery.

8. A traffic concentrator according to one or more of the preceding claims, characterized in that said traffic concentrator on the side of connection to the telephone exchange is provided with means for placing in "hold" those of the N-M lines on the side of the telephone exchange that cannot be served owing to the saturation of said bundle of M lines.

9. A traffic concetrator according to one or more of the preceding claims, characterized in that said program means associated to said first and second microcontrollers comprise program elements for the management of queues arranged for establishing criteria of assignment of the lines according to the traffic and of the unsuccessful attempts to establish a telephone connection by calls coming from the N lines on the side of the telephone exchanges and of the attempts to establish a connection by the telephone subscribers connected to the N connection points on the side of the telephone subscribers.

10. A traffic concentrator according to claim 9, characterized in that said program means comprise program elements arranged for modifying priority criteria of connection as a function of the kind of communication attempted on the telephone exchange side and/or telephone subscriber side.

11. A traffic concentrator according to one or more of the preceding claims, characterized in that said telephone exchange is constituted of a private branch exchange (PBX) and said connection points on the side of the telephone subscribers are internal telephone apparatus connected to said private telephone exchange.

FIG. 1

FIG. 2

FIG.3

FIG. 4

INITIALIZE — 120

START — 121

122 — INTERNAL LINES ALL BUSY? — NO

123 — HOLD THE N-M LINES ON EXCHANGE SIDE

125 NO — 124 — IS AN INTERNAL LINE FREE?

126 — REMOVE THE HOLD FROM THE N-M LINES

129 — 127 — COMMUNICATION WITH SUBSCRIBER SIDE UNIT

128 — ACTION REQUESTED BY SUBSCRIBER UNIT? — NO

130 — DO REQUESTED ACTION (E.G. EXECUTE OR BREAK A CONNECTION THROUGH THE SWITCH

131 — DETECTION OF STATUS ON EXCHANGE LINES

NO — 132 — INCOMING CALL? — YES

133 — COMMUNICATE TO UNIT ON SUBSCRIBER SIDE THE SUBSCRIBER IDENTIFIER (WHICH OUT OF M)

134 — PERFORM BY THE SWITCH THE CONNECTION WITH ONE OF THE FREE INTERNAL LINES

FIG. 5

10

FIG. 6

INITIALIZATION — 140

DET. STATUS SUBSCRIBER LINES — 141

NEW DISENGAGEMENT OF SUBSCRIBER LINES (TELEPHONE ON-HOOK) — 142

NO

NEW ENGAGEMENT OF SUBSCRIBER LINE (TELEPHONE OFF-HOOK) — 143

YES

NO

REMOVE THE CONNECTION — 151

COMMUNICATE TO EXCHANGE UNIT THE SUBSCRIBER LINE IDENTIFIER (1:N) THAT LEFT THE LINE AND THE WAITING QUEUE STATUS — 152

INTERNAL LINES ALL ENGAGED? — 144

YES

NO

INTERNAL LINES ALL ENGAGED? — 148

NO

COMMUNICATION WITH EXCHANGE UNIT — 145

MEMORIZE i-th SUBSCRIBER (i=1...N) IN THE QUEUE — 149

COMMUNICATE TO THE UNIT ON SUBSCRIBER SIDE THE SUBSCRIBER IDENTIFIER (1:N) REQUESTING A LINE — 150

IS ACTION REQUESTED BY EXCHANGE UNIT? — 146

NO

PERFORM THE SEVERAL LOCAL ACTIONS: CONNECTION/DISCONNECTION OF INTERNAL LINES WITH THE SWITCH — 147

EP 0 408 530 A2